# EUROPEAN PATENT APPLICATION

(11) **EP 3 865 542 A1**
(43) Date of publication of application: **18.08.2021**
(21) Application number: 19871858.7
(22) Date of filing: 29.08.2019
(51) Int. Cl.: C08L 83/07, C08K 3/00, C08K 5/14, C08K 5/5419, C08L 83/05

(54) **ADDITION CURING SILICONE COMPOSITION AND METHOD FOR MANUFACTURING SAME**

(30) Priority: 12.10.2018 JP 2018193154
(71) Applicant: SHIN-ETSU CHEMICAL CO., LTD., Tokyo 100-0004 (JP)
(72) Inventor: KITAZAWA, Keita, Annaka-shi, Gunma 379-0224 (JP)
(74) Representative: Mewburn Ellis LLP
(86) International application number: PCT/JP2019/033860
(87) International publication number: WO 2020/075411

(57) **Abstract**

This addition curing silicone composition in which an organopolysiloxane containing an aliphatic unsaturated hydrocarbon group, a heat-conductive filler, an organohydrodiene polysiloxane having a specific structure, an organic peroxide, a hydrolysable organosilane compound, a platinum group metal catalyst, and, as needed, a silicone resin having an aliphatic unsaturated hydrocarbon group are blended in specific amounts can provide a silicone thermal grease that has high thermal conductivity in comparison with the conventional silicone thermal grease, and that has good adhesion to various adherends.

## Description

### TECHNICAL FIELD

The present invention relates to addition-curable silicone compositions and to methods for producing the same. More specifically, the invention relates to a highly heat-conductive addition-curable silicone composition, particularly an addition-curable silicone composition which has good adhesiveness to various adherends even when it contains a large amount of heat-conductive filler, and to a method for producing the same.

### BACKGROUND ART

It is widely known that electronic components such as LSI chips and IC chips generate heat during use and undergo a decline in performance as a result. Various heat-dissipating techniques are used as means for resolving this problem. An example of a common heat-dissipating technique involves carrying out heat dissipation by placing a cooling member near a heat-generating member and, with both set in close contact, efficiently removing heat from the cooling member.

At this time, if there is a gap between the heat-generating member and the cooling member, thermal conductivity decreases due to the presence between them of air, which has a poor ability to conduct heat, so that the temperature of the heat-generating member fails to decline to a sufficient degree. In order to prevent the presence of such intervening air and enhance the thermal conductivity, use is made of a heat-dissipating material that has good thermal conductivity and the ability to conform to the surfaces of the members, such as a thermal grease or heat-dissipating sheet (Patent Documents 1 to 11: JP No. 2938428, JP No. 2938429, JP No. 3580366, JP No. 3952184, JP No. 4572243, JP No. 4656340, JP No. 4913874, JP No. 4917380, JP No. 4933094, JP-A 2008-260798, JP-A 2009-209165).

For example, Patent Document 9 describes a heat-conductive silicone grease composition which includes an organopolysiloxane having a specific structure, an alkoxysilane having specific substituents and a heat-conductive filler, which composition has a good heat conductivity and also has a good flowability and thus excellent workability. Patent Documents 10 and 11 disclose a sheet having tackiness and heat conductivity, and a heat-conductive composition in which an addition-curable silicone rubber composition is compounded with a heat-conductive filler and a silicone resin having no aliphatic unsaturated hydrocarbon groups. These Patent Documents 10 and 11 teach that heat-conductive cured materials can be provided which have, in a thin-film state, a suitable tackiness and a good heat conductivity.

Some thermal greases have been imparted with a bonding capability to enable them to strongly bond a semiconductor chip and a heat spreader. This is because, when a semiconductor chip and a heat spreader are not fully bonded through the grease, sufficient heat-dissipating performance is not exhibited, resulting in a marked drop in performance. It is thus important to effect a strong bond between the semiconductor chip and the heat spreader by means of the grease. At the same time, to enhance the thermal conductivity of the thermal grease, it is also important for the grease to be loaded with a large amount of heat-conductive filler. When the grease is loaded with a large amount of heat-conductive filler, the relative content of organic ingredients decreases, lowering the adhesiveness of the resulting cured material. When the adhesiveness decreases, the cured material can no longer conform to semiconductor chip strains due to the thermal excursions of heat generation and cooling. In the worst case, this may give rise to semiconductor chip failure.

Patent Document 12 (JP-A 2012-102283) discloses a heat-conductive silicone grease composition which includes as the essential ingredients an alkenyl group-containing organopolysiloxane, a hydrolysable methyl polysiloxane, a heat-conductive filler, an organohydrogenpolysiloxane, a triazine ring and alkenyl group-containing adhesive promoter and a platinum-based catalyst. In Patent Document 12, this composition is described as being capable of providing a thermal grease which, when heat aging has been carried out at an elevated temperature after curing, undergoes little rise in hardness and minimal decrease in elongation. Patent Document 13 (JP-A 2012-96361) discloses a heat-conductive silicone composition that includes a peroxide having a 10-hour half-life temperature of at least 80°C and less than 130°C as the curing agent, which composition can provide a thermal grease that readily cures on the surface of a substrate having a gold or other noble metal layer.

Conventional silicone thermal greases have drawbacks in that either the thermal conductivity is inadequate, or the thermal conductivity is high but the adhesiveness is low. In recent years, the amount of heat generated by semiconductor devices has continued to rise, so there exists a growing need for higher thermal conductivity in thermal greases. As semiconductor devices become larger, the level of semiconductor chip strain is also rising, so that improving the adhesiveness of thermal greases has become a critical concern as well.

### PRIOR ART DOCUMENTS

### Patent Documents

Patent Document 1: JP No. 2938428
Patent Document 2: JP No. 2938429
Patent Document 3: JP No. 3580366
Patent Document 4: JP No. 3952184
Patent Document 5: JP No. 4572243
Patent Document 6: JP No. 4656340
Patent Document 7: JP No. 4913874
Patent Document 8: JP No. 4917380
Patent Document 9: JP No. 4933094
Patent Document 10: JP-A 2008-260798
Patent Document 11: JP-A 2009-209165
Patent Document 12: JP-A 2012-102283
Patent Document 13: JP-A 2012-96361

### SUMMARY OF THE INVENTION

### Technical Problem

It is therefore an object of the present invention to provide an addition-curable silicone composition which is capable of giving a silicone thermal grease that, compared with conventional silicone thermal greases, has a high thermal conductivity and a good adhesiveness to various adherends. Another object of the invention is to provide a method for producing such a composition.

### Solution to the Problem

The inventor has conducted extensive investigations in order to achieve these objects and discovered as a result that by compounding specific amounts of an aliphatic unsaturated hydrocarbon group-containing organopolysiloxane, a heat-conductive filler, an organohydrogenpolysiloxane having a specific structure, an organic peroxide, a hydrolysable organosilane compound, a platinum group metal catalyst and, optionally, an aliphatic unsaturated hydrocarbon group-containing silicone resin, there can be obtained an addition-curable silicone composition having a good adhesiveness to various adherends even when it contains a large amount of heat-conductive filler.

Accordingly, the invention provides the following addition-curable silicone composition and method of production therefor.
[1] An addition-curable silicone composition which includes as essential ingredients:
   (A) 100 parts by weight of an organopolysiloxane which has at least two aliphatic unsaturated hydrocarbon groups per molecule and a kinematic viscosity at 25°C of from 60 to 100,000 mm²/s;
   (B) a silicone resin having at least one aliphatic unsaturated hydrocarbon group per molecule, in an amount of from 0 to 100 parts by weight per 100 parts by weight of component (A);
   (C) at least one heat-conductive filler selected from the group consisting of metals, metal oxides, metal hydroxides, metal nitrides, metal carbides and carbon allotropes, in an amount of from 10 to 95 wt% of the overall composition;
   (D) an organohydrogenpolysiloxane having two or more silicon-bonded hydrogen atoms per molecule, in an amount such that the number of SiH groups with respect to the sum of the number of aliphatic unsaturated hydrocarbon groups in components (A) and (B) is from 0.5 to 5;
   (E) an organic peroxide selected from the group consisting of peroxyketals, hydroperoxides, dialkyl peroxides, diacyl peroxides, peroxyesters and peroxydicarbonates, in an amount of from 0.01 to 10 parts by weight per 100 parts by weight of components (A) and (B) combined;
   (F) a hydrolysable organosilane compound of general formula (1) below, in an amount of from 0.1 to 30 parts by weight per 100 parts by weight of components (A) and (B) combined 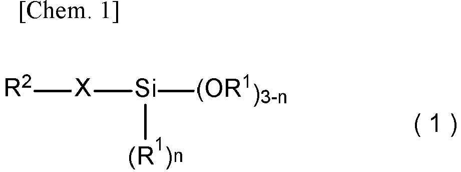 (wherein each R¹ is a like or unlike monovalent hydrocarbon group of 1 to 10 carbon atoms which may have a substituent; R² is a group selected from the group consisting of epoxy, acryloyl, methacryloyl and alkoxysilyl groups; X is an alkylene group of 1 to 20 carbon atoms which may contain a heteroatom; and n is an integer from 0 to 2); and
   (G) an effective amount of a platinum group metal catalyst.
[2] The addition-curable silicone composition of [1], further including (H) a reaction regulator in an amount of from 0.05 to 5 parts by weight per 100 parts by weight of components (A) and (B) combined.
[3] The addition-curable silicone composition of [1] or [2], further including (I) a hydrolysable organopolysiloxane compound of general formula (2) below in an amount of from 1 to 200 parts by weight of per 100 parts by weight of components (A) and (B) combined 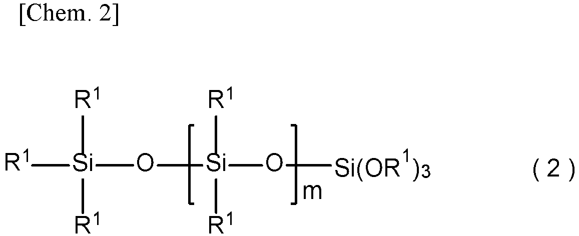 (wherein each R¹ is a like or unlike monovalent hydrocarbon group of 1 to 10 carbon atoms which may have a substituent, and m is an integer from 5 to 100).
[4] The addition-curable silicone composition of any of [1] to [3], further including (J) a hydrolysable organopolysiloxane compound of general formula (3) below, in an amount of from 1 to 50 parts by weight per 100 parts by weight of components (A) and (B) combined 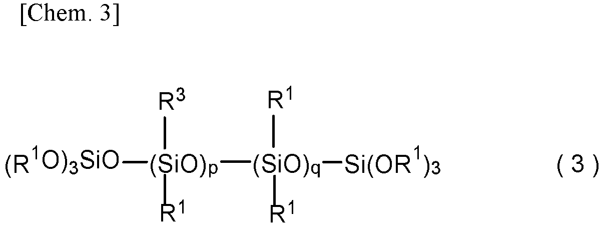 (wherein each R¹ is a like or unlike monovalent hydrocarbon group of 1 to 10 carbon atoms which may have a substituent; R³ is an alkenyl group of 2 to 6 carbon atoms; and p and q are numbers which satisfy the conditions 1 ≤ p ≤ 50, 1 ≤ q ≤ 99 and 5 ≤ p+q ≤ 100).
[5] A method for producing the addition-curable silicone composition of any of [1] to [4], which method includes the steps of first heating and mixing together components (A) to (C) and component (F) at between 50 and 200°C; and subsequently mixing in components (D), (E) and (G).

### ADVANTAGEOUS EFFECTS OF THE INVENTION

The addition-curable silicone composition of the invention has a good adhesiveness to various adherends even when it contains a large amount of heat-conductive filler, and so is able to exhibit both a high thermal conductivity and a strong adhesiveness. In other words, it is capable of providing a silicone thermal grease that can accommodate the increased amount of heat generated by, and the larger sizes of, recent semiconductor devices.

### DESCRIPTION OF EMBODIMENTS

The invention is described in detail below.

### Component (A)

Component (A) is an organopolysiloxane which has at least 2, preferably from 2 to 100, and more preferably from 2 to 50, aliphatic unsaturated hydrocarbon groups per molecule and which has a kinematic viscosity at 25°C of from 60 to 100,000 mm²/s.

The aliphatic unsaturated hydrocarbon groups are monovalent hydrocarbon groups of preferably from 2 to 8 carbon atoms, more preferably from 2 to 6 carbon atoms, which have an aliphatic unsaturated bond, and are still more preferably alkenyl groups. Examples include alkenyl groups such as vinyl, allyl, propenyl, isopropenyl, butenyl, hexenyl, cyclohexenyl and octenyl groups. Vinyl groups are especially preferred. The aliphatic unsaturated hydrocarbon groups may be bonded to silicon atoms at the ends of the molecular chain or to silicon atoms part way along the molecular chain, or may be bonded to both.

The organopolysiloxane of component (A) preferably has from 0.00001 to 0.01 mol/g, especially from 0.0001 to 0.01 mol/g, of aliphatic unsaturated hydrocarbon groups per molecule.

Organic groups other than aliphatic unsaturated hydrocarbon groups that bond to the silicon atoms on the organopolysiloxane are substituted or unsubstituted monovalent hydrocarbon groups of from 1 to 18 carbon atoms, preferably from 1 to 10 carbon atoms, and more preferably from 1 to 8 carbon atoms, which have no aliphatic unsaturated bonds. Examples include alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; and any of these groups in which some or all hydrogen atoms are substituted with fluorine, bromine, chlorine or other halogen atoms, cyano groups or the like, such as chloromethyl, chloropropyl, bromoethyl, trifluoropropyl and cyanoethyl groups. Methyl groups are especially preferred.

The organopolysiloxane has a kinematic viscosity at 25°C of from 60 to 100,000 mm²/s, and preferably from 100 to 30,000 mm²/s. At a kinematic viscosity below 60 mm²/s, the physical properties of the silicone composition decrease; at above 100,000 mm²/s, the silicone composition has little extensibility.

In this invention, the kinematic viscosity is a value measured at 25°C with an Ubbelohde-type Ostwald viscometer (the same applies below).

So long as it possesses the above properties, the organopolysiloxane has a molecular structure which, although not particularly limited, is exemplified by linear structures, branched structures, and linear structures having a partially branched or cyclic structure. In particular, a linear structure in which the backbone consists of repeating diorganosiloxane units and both ends of the molecular chain are capped with triorganosiloxy groups, is preferred. An organopolysiloxane with this linear structure may have branched structures or cyclic structures in some places.

One such organopolysiloxane may be used alone or two or more may be used in combination.

### Component (B)

Component (B) is a silicone resin. The silicone resin of component (B) has at least one aliphatic unsaturated hydrocarbon group per molecule. Although component (B) need not be included, when the silicone resin of component (B) is included, the adhesive strength of the cured material obtained from the addition-curable silicone composition of the invention can be enhanced.

Component (B) in the invention is preferably a silicone resin containing SiO_{4/2} units, R⁴₂R⁵SiO_{1/2} units and R⁴₃SiO_{1/2} units (wherein each R⁴ is independently a monovalent hydrocarbon group that has no aliphatic unsaturated bonds, and R⁵ is a monovalent aliphatic unsaturated hydrocarbon group).

In the above formulas, each R⁴ is independently a substituted or unsubstituted monovalent hydrocarbon group of from 1 to 18 carbon atoms, preferably from 1 to 10 carbon atoms, and more preferably from 1 to 8 carbon atoms, that has no aliphatic unsaturated bonds. Specific examples of R⁴ include alkyl groups such as methyl, ethyl, propyl, isopropyl, butyl, isobutyl, tert-butyl, pentyl, neopentyl, hexyl, cyclohexyl, octyl, nonyl and decyl groups; aryl groups such as phenyl, tolyl, xylyl and naphthyl groups; aralkyl groups such as benzyl, phenylethyl and phenylpropyl groups; and any of these groups in which some or all hydrogen atoms are substituted with fluorine, bromine, chlorine or other halogen atoms, cyano groups or the like, such as chloromethyl, chloropropyl, bromoethyl, trifluoropropyl and cyanoethyl groups. Of these, methyl groups are especially preferred.

R⁵ is a monovalent aliphatic unsaturated hydrocarbon group, preferably a monovalent hydrocarbon group of 2 to 8 carbon atoms, especially 2 to 6 carbon atoms, that has an aliphatic unsaturated bond, and more preferably an alkenyl group. Examples of the alkenyl group include vinyl, allyl, propenyl, isopropenyl, butenyl, hexenyl, cyclohexenyl and octenyl groups. Of these, a vinyl group is preferred.

The silicone resin of component (B) has at least one aliphatic unsaturated hydrocarbon group per molecule, with the amount of such groups being preferably from 1 × 10⁻⁵ to 1 × 10⁻² mol/g, and more preferably from 1 × 10⁻⁴ to 2 × 10⁻³ mol/g.

Also, in component (B), the molar ratio of R⁴₂R⁵SiO_{1/2} units and R⁴₃SiO_{1/2} units (M units) to SiO_{4/2} units (Q units) is such that the ratio (M units)/(Q units) is a number from 0.1 to 3.0, preferably a number from 0.3 to 2.5, and more preferably a number from 0.5 to 2. At a molar ratio of M units to Q units within this range, a grease having a good adhesiveness and adhesive strength can be provided. In addition, the silicone resin of the invention may include R₂SiO_{2/2} units (D units) and RSiO_{3/2} units (T units) on the molecule (in these formulas, R is R⁵ or R⁶) to a degree that does not detract from the properties of the addition-curable silicone composition of the invention (such as from 1 to 50 mol% of the silicone resin serving as component (B)).

The silicone resin used in this invention is a solid or a viscous liquid at room temperature. The average molecular weight of the silicone resin is not particularly limited, although it is preferably a molecular weight such that this silicone resin, when dissolved in xylene to form a 50 wt% solution, has a kinematic viscosity which is from 0.5 to 10 mm²/s, and preferably from 1 to 5 mm²/s. By having the kinematic viscosity of the silicone resin fall within this range, a decrease in the physical properties of the composition can be prevented, which is preferable.

The amount of the silicone resin serving as component (B) per 100 parts by weight of component (A) is from 0 to 100 parts by weight. When included, it is preferably from 1 to 100 parts by weight, and more preferably from 3 to 50 parts by weight. When the amount of component (B) is lower than this lower limit value, it may be inadequate for manifesting adhesiveness; when it is higher than this upper limit value, the silicone composition may have little extensibility.

### Component (C)

Component (C) is one or more heat-conductive filler selected from metals, metal oxides, metal hydroxides, metal nitrides, metal carbides and carbon allotropes. Examples include aluminum, silver, copper, metallic silicon, alumina, zinc oxide, magnesium oxide, aluminum oxide, silicon dioxide, cerium oxide, iron oxide, aluminum hydroxide, cerium hydroxide, aluminum nitride, boron nitride, silicon carbide, diamond, graphite, carbon nanotubes and graphene. One of these may be used alone or two or more may be used in suitable combination. A heat-conductive filler that is a combination of a large-particle component and a small-particle component is preferred.

When the large-particle component has an average particle size that is smaller than 0.1 µm, the viscosity of the resulting composition may become too high and the composition may have little extensibility. When the average particle size is larger than 100 µm, the resulting composition may be nonuniform. Hence, the average particle size of the large-particle component is within the range of 0.1 to 100 µm, preferably within the range of 10 to 50 µm, and more preferably within the range of 10 to 45 µm.

When the small-particle component has an average particle size that is smaller than 0.01 µm, the viscosity of the resulting composition may become too high and the composition may have little extensibility. When the average particle size is 10 µm or more, the resulting composition may be nonuniform. Hence, the average particle size is at least 0.01 and less than 10 µm, and preferably within the range of 0.1 to 4 µm.

The relative proportions of the large-particle component and the small-particle component are not particularly limited, although a ratio in the range of from 9:1 to 1:9 (weight ratio) is preferred. The large-particle component and the small-particle component may have shapes which are, without particular limitation, spherical, amorphous, acicular or the like.

The average particle size can be determined as the volume-based average value (or median diameter) in particle size distribution measurement by the laser diffraction method.

The component (C) content may be set to from 10 to 95 wt%, preferably from 20 to 90 wt%, more preferably from 30 to 88 wt%, and still more preferably from 50 to 85 wt%, of the overall composition. At more than 95 wt%, the composition has little extensibility; at less than 10 wt%, the composition has little heat conductivity.

### Component (D)

Component (D) is an organohydrogenpolysiloxane having two or more, preferably 2 to 100, and more preferably 2 to 20, silicon-bonded hydrogen atoms (SiH groups) per molecule. This organohydrogenpolysiloxane should be one which can form a crosslinked structure via addition reactions by the SiH groups on the molecule with the aliphatic unsaturated hydrocarbon groups on components (A) and (B) in the presence of a platinum group metal catalyst.

This organohydrogenpolysiloxane, so long as it possesses the above properties, has a molecular structure exemplified by, without particular limitation, linear structures, branched structures, cyclic structures and linear structures that are branched or cyclic in places. A linear structure or a cyclic structure is preferred.

The organohydrogenpolysiloxane has a kinematic viscosity at 25°C which is preferably from 1 to 1,000 mm²/s, and more preferably from 10 to 100 mm²/s. At a kinematic viscosity of at least 1 mm²/s, there is no risk of a decline in the physical properties of the silicone composition; at a kinematic viscosity of 1,000 mm²/s or less, there is no risk of the silicone composition having little extensibility.

The silicon-bonded organic groups on this organohydrogenpolysiloxane are exemplified by substituted or unsubstituted monovalent hydrocarbon groups other than aliphatic unsaturated hydrocarbon groups. These are, in particular, substituted or unsubstituted monovalent hydrocarbon groups of 1 to 12 carbon atoms, preferably 1 to 10 carbon atoms. Examples include alkyl groups such as methyl, ethyl, propyl, butyl, hexyl and dodecyl groups; aryl groups such as the phenyl group; aralkyl groups such as 2-phenylethyl and 2-phenylpropyl groups; any of these groups in which some or all hydrogen atoms are substituted with halogen atoms such as fluorine, bromine or chlorine, cyano groups, epoxy ring-containing organic groups (glycidyl group or glycidyloxy group-substituted alkyl groups) or the like. Specific examples include chloromethyl, chloropropyl, bromoethyl, trifluoropropyl, cyanoethyl, 2-glycidoxyethyl, 3-glycidoxypropyl and 4-glycidoxybutyl groups. Of these, methyl and 3-glycidoxypropyl groups are preferred.

A single organohydrogenpolysiloxane may be used alone, or two or more may be used in admixture.

The content of the organohydrogenpolysiloxane serving as component (D) is an amount such that the number of SiH groups on component (D) with respect to the sum of the number of aliphatic unsaturated hydrocarbon groups on components (A) and (B) is from 0.5 to 5, preferably from 0.7 to 4.5, and more preferably from 1 to 4. At an amount of component (D) below this lower limit value, the addition reaction does not fully proceed and crosslinking is inadequate. At an amount in excess of this upper limit value, the crosslinked structure may become nonuniform and the shelf stability of the composition may markedly worsen.

In this invention, an amount such that the number of SiH groups in the composition (especially on component (D)) with respect to the sum of the number of aliphatic unsaturated hydrocarbon groups in the composition (especially on component (A), component (B), component (F) and the subsequently described optional component (J)) is from 0.5 to 5, especially from 1 to 4, is desirable.

### Component (E)

Component (E) is an organic peroxide that decomposes under specific conditions to form free radicals, and is selected from the group consisting of peroxyketals, hydroperoxides, dialkyl peroxides, diacyl peroxides, peroxyesters and peroxydicarbonates. One may be used alone or two or more may be used in suitable combination. The organic peroxide serves as a reaction initiator that introduces a silalkylene structure into the siloxane crosslinked structure of the silicone composition obtained in this invention.

Specifically, suitable use can be made of peroxyketals such as 1, 1-di(tert-butylperoxy)cyclohexane and 2,2-(4,4-di(tert-butylperoxy)cyclohexyl)propane, hydroperoxides such as p-menthane hydroperoxide and diisopropylbenzene hydroperoxide, dialkyl peroxides such as dicumyl peroxide, tert-butyl cumyl peroxide and 2,5-dimethyl-2,5-di(tert-butylperoxy)hexane, diacyl peroxides such as dibenzoyl peroxide and disuccinoyl peroxide, peroxyesters such as tert-butyl peroxyacetate and tert-butyl peroxybenzoate, and peroxydicarbonates such as diisopropyl peroxydicarbonate. In particular, the use of a peroxyketal, hydroperoxide, dialkyl peroxide or peroxyester having a relatively high decomposition temperature is preferable from the standpoint of handleability and shelf stability.

It is preferable for the decomposition temperature for obtaining a one-hour half-life to be in the range of 50 to 200°C, and more preferably in the range of 80 to 170°C. When the decomposition temperature for obtaining a one-hour half-life is below 50°C, the reaction may arise explosively, making handling difficult; when it exceeds 200°C, the reactivity is low, and so the efficiency with which the silalkylene structure is introduced into the structure of the silicone composition may decrease. These organic peroxides may also be used after dilution with an optional organic solvent, hydrocarbon, liquid paraffin, inert solid or the like.

The component (E) content per 100 parts by weight of components (A) and (B) combined is from 0.01 to 10 parts by weight, and preferably from 0.1 to 5 parts by weight. When the content is less than 0.01 part by weight, the efficiency with which the silalkylene structure is introduced into the structure of the silicone composition may decrease; when it exceeds 10 parts by weight, the shelf stability of the silicone composition may decrease.

### Component (F)

Component (F) is a hydrolysable organosilane compound of general formula (1) below. One may be used alone or two or more may be used in suitable combination. Component (F) serves as an adhesive modifier for enhancing the adhesiveness of the silicone composition obtained in this invention. 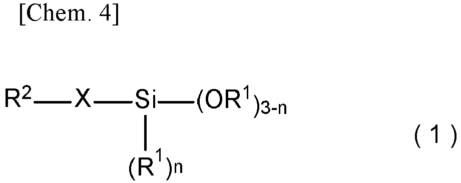 In the formula, each R¹ is a like or unlike monovalent hydrocarbon group of 1 to 10 carbon atoms which may have a substituent; R² is a group selected from among epoxy, acryloyl, methacryloyl and alkoxysilyl groups; X is an alkylene group of 1 to 20 carbon atoms which may contain a heteroatom; and n is an integer from 0 to 2.

R¹ in formula (1) is a monovalent hydrocarbon group of 1 to 10 carbon atoms which may have a substituent; preferably a monovalent saturated aliphatic hydrocarbon group which may have a substituent, a monovalent unsaturated aliphatic hydrocarbon group which may have a substituent or a monovalent aromatic hydrocarbon group (inclusive of aromatic heterocycles) which may have a substituent; more preferably a monovalent saturated aliphatic hydrocarbon group which may have a substituent or a monovalent aromatic hydrocarbon group which may have a substituent; and most preferably a monovalent saturated aliphatic hydrocarbon group which may have a substituent.

Monovalent saturated hydrocarbon groups which may have a substituent are exemplified by ones having from 1 to 10 carbon atoms, preferably from 1 to 8 carbon atoms, and more preferably from 1 to 6 carbon atoms, including linear alkyl groups such as methyl, ethyl, propyl, butyl, pentyl, hexyl, heptyl and octyl groups; branched alkyl groups such as isopropyl, isobutyl, tert-butyl, isopentyl and neopentyl groups; cycloalkyl groups such as cyclopentyl, cyclohexyl and cycloheptyl groups; and halogen-substituted alkyl groups such as chloromethyl, 3-chloropropyl, 3,3,3-trifluoropropyl and bromopropyl groups.

Monovalent unsaturated aliphatic hydrocarbon groups which may have a substituent are exemplified by ones having from 2 to 10 carbon atoms, preferably from 2 to 8 carbon atoms, and more preferably from 2 to 6 carbon atoms, including alkenyl groups such as ethenyl, 1-methylethenyl and 2-propenyl groups; and alkynyl groups such as ethynyl and 2-propynyl groups.

Monovalent aromatic hydrocarbon groups which may have a substituent are exemplified by ones having from 6 to 10 carbon atoms, preferably from 6 to 8 carbon atoms, and more preferably 6 carbon atoms, including aryl groups such as phenyl and tolyl groups; aralkyl groups such as benzyl and 2-phenylethyl groups; and halogen-substituted aryl groups such as α,α,α-trifluorotolyl and chlorobenzyl groups.

Of these, methyl, ethyl, 3,3,3-trifluoropropyl and phenyl groups are preferred, methyl, ethyl and phenyl groups are more preferred, and a methyl group is especially preferred as R¹.

R² is a group selected from epoxy, acryloyl, methacryloyl and alkoxysilyl groups. When the aim is to enhance adhesiveness to metal adherends such as semiconductor chips and heat spreaders in semiconductor devices, it is preferable to select an epoxy group or an alkoxysilyl group.

Here, examples of alkoxysilyl groups include trimethoxy, dimethoxymethyl, methoxydimethylsilyl, triethoxy, diethoxymethyl and ethoxydimethylsilyl groups. Of these, trimethoxy and triethoxy groups are preferred.

X is an alkylene group of 1 to 20 carbon atoms which may include a heteroatom; it serves as a spacer that links the R² moiety and the silicon atom. The structure of X may be linear, branched or the like and is not particularly limited, although it is preferably linear. Specific examples of X include those shown below.
- CH₂OCH₂CH₂CH₂-
- CH₂OCH₂CH₂CH₂CH₂CH₂CH₂CH₂CH₂-
- (CH₂)ₓ-
(wherein x is an integer from 1 to 20)

The subscript 'n' is an integer from 0 to 2, and specifies the number of alkoxy groups on the alkoxysilyl group of the hydrolysable organosilane compound of formula (F). The higher the number of alkoxysilyl groups on component (F), the more readily component (F) is fixed on the surface of the heat-conductive filler serving as component (C); hence, n is preferably 0 or 1, and more preferably 0.

The content of component (F) per 100 parts by weight of components (A) and (B) combined is from 0.1 to 30 parts by weight, and preferably from 1 to 20 parts by weight. At a content below 0.1 part by weight, the coating amount on the surface of the heat-conductive filler surface decreases, and so there is a risk that sufficient adhesiveness will not be manifested. A content greater than 30 parts by weight lowers the strength of the cured silicone composition and, in turn, presents a risk that adhesiveness will not be sufficiently manifested, which is undesirable.

### Component (G)

Component (G) is a platinum group metal catalyst that serves to promote addition reactions by the above components. Hitherto known platinum group metal catalysts which are used in addition reactions may be used as the platinum group metal catalyst. Examples include platinum-based, palladium-based and rhodium-based catalysts. Of these, platinum or platinum compounds that are relatively easily available are preferred. Illustrative examples include uncombined platinum, platinum black, chloroplatinic acid, platinum-olefin complexes, platinum-alcohol complexes and platinum coordination compounds. A single platinum group metal catalyst may be used alone or two or more may be used in combination.

The component (G) content should be an amount that is effective as a catalyst; i.e. the effective amount required for promoting the addition reaction and curing the addition-curable silicone composition of the invention. The component (G) content, expressed in terms of the weight of the platinum group metal atoms, is preferably from 0.1 to 500 ppm, and more preferably from 1 to 200 ppm, of the combined weight of components (A) and (B). At a catalyst content below this lower limit value, the effect as a catalyst may not be obtainable; at a content higher than this upper limit value, the catalytic effect ceases to increase, making such an amount uneconomical and thus undesirable.

Aside from the above ingredients, the following optional ingredients may be added where necessary to the addition-curable silicone composition of the invention.

### Component (H)

Component (H) is a reaction regulator which keeps the hydrosilylation reaction from proceeding at room temperature. It can be added to extend the shelf life and the pot life. A conventional known regulator that is used in addition-curable silicone compositions may be used as this reaction regulator. Examples include acetylene compounds such as acetylene alcohols (e.g. ethynylmethyldecylcarbinol, 1-ethynyl-1-cyclohexanol, 3,5-dimethyl-1-hexyn-3-ol), various nitrogen compounds such as tributylamine, tetramethylethylenediamine and benzotriazole, organophosphorus compounds such as triphenylphosphine, oxime compounds and organochloro compounds.

When component (H) is included, the content thereof per 100 parts by weight of components (A) and (B) combined is preferably from 0.05 to 5 parts by weight, and more preferably from 0.1 to 1 part by weight. When the amount of reaction regulator is less than 0.05 part by weight, the satisfactory shelf life and pot life that are desired may not be obtainable. On the other hand, when the amount is greater than 5 parts by weight, the curability of the silicone composition may decrease.

To improve dispersibility in the silicone composition, the reaction regulator may be used after being diluted with an organo(poly)siloxane, toluene or the like.

### Component (I)

In addition, (I) a hydrolysable organopolysiloxane compound of general formula (2) below may be included in the addition-curable silicone composition of the invention. The hydrolysable organopolysiloxane compound serving as component (I) is used to treat the surface of the heat-conductive filler and helps to achieve higher loadings of the filler.

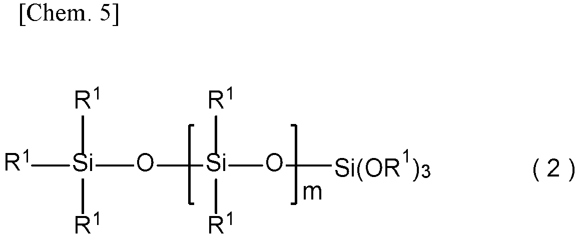

In the formula, each R¹ is a like or unlike monovalent hydrocarbon group of 1 to 10 carbon atoms which may have a substituent, and m is an integer from 5 to 100.

R¹ in formula (2) is the same as described above, and is most preferably a methyl group. The subscript 'm' is an integer from 5 to 100, and preferably an integer from 10 to 60. When the value of m is smaller than 5, oil bleed from the silicone composition may become severe, worsening the reliability. On the other hand, when the value of m is larger than 100, the wettability with the filler may be inadequate.

When component (I) is included, the content thereof per 100 parts by weight of components (A) and (B) combined is preferably from 1 to 200 parts by weight, and more preferably from 5 to 30 parts by weight. When the amount of component (I) is lower than 1 part by weight, sufficient wettability may not be exhibited. When the amount of component (I) is higher than 200 parts by weight, bleed from the composition may become severe.

### Component (J)

The addition-curable silicone composition of the invention may additionally include a hydrolysable organopolysiloxane compound (J) of general formula (3) below. The hydrolysable organopolysiloxane compound serving as component (J) treats the surface of the heat-conductive filler and also has a reinforcing effect that increases the strength of the silicone composition. 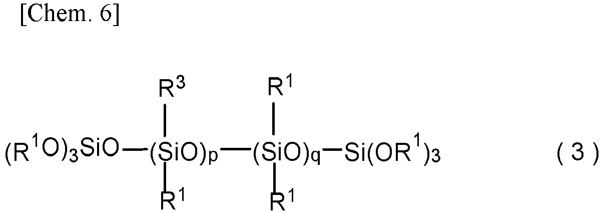 In the formula, each R¹ is a like or unlike monovalent hydrocarbon group of 1 to 10 carbon atoms which may have a substituent; R³ is an alkenyl group of 2 to 6 carbon atoms; and p and q are numbers which satisfy the conditions 1 ≤ p ≤ 50, 1 ≤ q ≤ 99 and 5 ≤ p+q ≤ 100.

R¹ in formula (3) is the same as described above, and is most preferably a methyl group. R³ is an alkenyl group of 2 to 6 carbon atoms, specific examples of which include vinyl, allyl, propenyl, isopropenyl, butenyl, hexenyl and cyclohexenyl groups. A vinyl group is especially preferred.

The subscript 'p' is from 1 to 50, and preferably from 1 to 10; and the subscript 'q' is from 1 to 99, and preferably from 4 to 50. When p is low, a sufficient reinforcing effect may not be imparted to the silicone composition; when p is high, crosslinking may be nonuniform. When q is low, oil bleed may become severe; when q is high, treatment of the heat-conductive filler surfaces may be inadequate. Also, the sum p+q is such that 5 ≤ p+q ≤ 100, and preferably such that 5 ≤ p+q ≤ 60. When p+q is less than 5, oil bleed from the composition may become severe, worsening the reliability. On the other hand, when p+q is larger than 100, the wettability with the filler may be inadequate.

When component (J) is included, the content thereof per 100 parts by weight of components (A) and (B) combined is from 1 to 50 parts by weight, and preferably from 2 to 30 parts by weight. At an amount of component (J) below this lower limit value, sufficient wettability and a reinforcing effect may not be exhibited. On the other hand, at an amount of component (J) higher than this upper limit value, oil bleed from the composition may become severe.

### Other Ingredients

The addition-curable silicone composition of the invention may include an organo(poly)siloxane without reactivity, such as methylpolysiloxane, in order to adjust properties such as the strength and viscosity of the composition. Also, a hitherto known antioxidant such as 2,6-di-tert-butyl-4-methylphenol may be included so as to prevent deterioration of the silicone composition. Where desired, dyes, pigments, fire retardants, sedimentation inhibitors, thixotropy modifiers and the like may also be included.

### Preparation of Silicone Composition

The method for producing the silicone composition of the invention is described. The method for producing the silicone composition of this invention, although not particularly limited, includes the step of preparing a silicone composition containing above components (A) to (G) and also, where necessary, components (H), (I) and (J).

For example, preparation may be carried out by a method that mixes together components (A) to (G) and also, where necessary, components (H), (I) and (J) using a mixer such as the Trimix, Twinmix or Planetary Mixer (all registered trademarks of mixers manufactured by Inoue Mfg., Inc.), the Ultra Mixer (registered trademark of mixers manufactured by Mizuho Industrial Co., Ltd.) or the HIVIS DISPER MIX (registered trademark of mixers manufactured by Tokushu Kika Kogyo KK).

The addition-curable silicone composition of the invention may be mixed under heating. The heating conditions are not particularly limited, although the temperature is generally between 25 and 220°C, preferably between 40 and 200°C, and more preferably between 50 and 200°C, and the heating time is generally from 3 minutes to 24 hours, preferably from 5 minutes to 12 hours, and even more preferably from 10 minutes to 6 hours. Degassing may be carried out during heating.

In this invention, the process of first heating and mixing together components (A) to (C) and component (F) at between 50°C and 200°C, and then mixing in components (D), (E) and (F) is preferred from the standpoint of the silicone composition manifesting a good adhesive strength. When the optional ingredients (H), (I) and (J) are included, the process of first heating and mixing together components (A) to (C), (F), (I) and (J), and then mixing in components (E), (E), (G) and (H) is preferred.

The addition-curable silicone composition of the invention has a viscosity measured at 25°C which is preferably from 1 to 1,000 Pa·s, more preferably from 20 to 700 Pa·s, and even more preferably from 40 to 600 Pa·s. At a viscosity below 1 Pa· s, the workability may worsen in that, for example, shape retention becomes difficult. On the other hand, when the viscosity exceeds 1,000 Pa·s, the workability may worsen in that, for example, discharging and applying the composition become difficult. This viscosity can be obtained by adjusting the contents of the above-described ingredients.

The addition-curable silicone composition of the invention is heat-conductive, typically having a thermal conductivity of from 0.5 to 10 W/m·K.

In this invention, the viscosity is a value measured at 25°C with a rotational viscometer. The thermal conductivity is a value measured by the hot disk method.

The addition-curable silicone composition of the invention may be placed between an electronic component (e.g. an LSI chip) or other heat-generating member and a cooling member, and suitably used as a composition for heat dissipation by conducting heat from the heat-generating member to the cooling member. It can be used in the same way as a conventional silicone thermal grease. For example, the addition-curable silicone composition of the invention can be cured by heat generated from a heat-generating member such as an electronic component. Alternatively, the addition-curable silicone composition of the invention may be applied and then deliberately heat-cured. A semiconductor device in which the cured form of the addition-curable silicone composition of the invention has been interposed between a heat-generating member and a cooling member can thus be provided.

The curing conditions when heat-curing the addition-curable silicone composition of the invention, although not particularly limited, are typically between 80 and 200°C, preferably between 100 and 180°C, and from 30 minutes to 4 hours, preferably from 30 minutes to 2 hours.

The addition-curable silicone composition of the invention, even when it includes a large amount of heat-conductive filler, has a good adhesiveness to various types of adherends, thus enabling both a high thermal conductivity and a strong adhesiveness to be achieved. Hence, it can be suitably employed in particular as a thermal grease for use in semiconductor devices that generate a large amount of heat or are of large size.

### EXAMPLES

The invention is illustrated more fully below by way of Examples and Comparative Examples, although the invention is not limited by these Examples. The kinematic viscosities are values measured at 25°C with an Ubbelohde-type Ostwald viscometer.

The following ingredients for preparing the addition-curable silicone composition of the invention were furnished.

### Component (A)

A-1: Dimethylpolysiloxane capped at both ends with dimethylvinylsilyl groups and having a kinematic viscosity at 25°C of 600 mm²/s; SiVi group content, 0.00014 mol/g

### Component (B)

B-1: A silicone resin of the average compositional formula below; kinematic viscosity when prepared as a 50 wt% solution in xylene as the solvent, 3.0 mm²/s; SiVi group content, 0.0004 mol/g

(SiO_{4/2})_{1.0}((CH₂=CH)(CH₃)₂SiO_{1/2})_{0.12}((CH₃)₃SiO_{1/2})_{0.75}

### Component (C)

C-1: An aluminum powder obtained by premixing an aluminum powder having an average particle size of 20.0 µm with an aluminum powder having an average particle size of 2.0 µm in a 60:40 weight ratio
C-2: A zinc oxide powder having an average particle size of 1.0 µm

### Component (D)

D-1: The methylhydrogendimethylpolysiloxane of formula (4) below (kinematic viscosity at 25°C, 12 mm²/s)

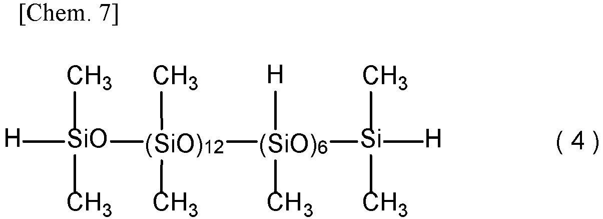

D-2: The polysiloxane of formula (5) below (kinematic viscosity at 25°C, 25 mm²/s)

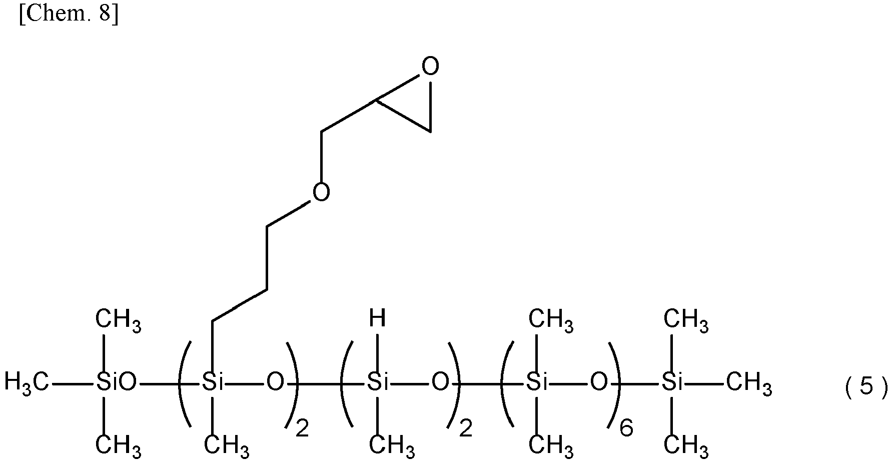

D-3: The polysiloxane of formula (6) below (kinematic viscosity at 25°C, 11 mm²/s)

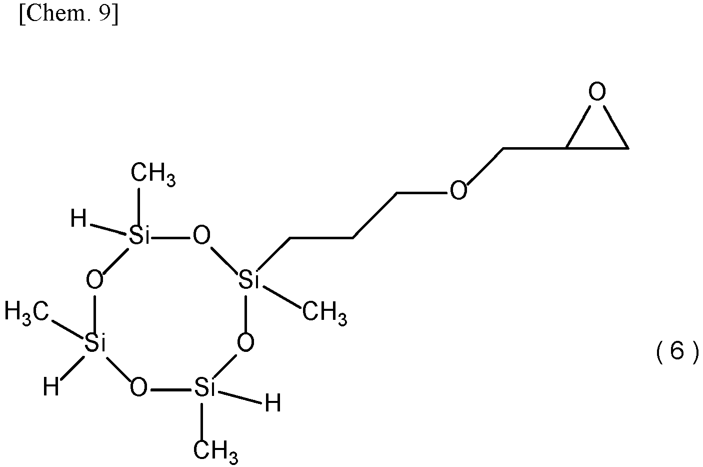

### Component (E)

E-1: 2,5-Dimethyl-2,5-di(tert-butylperoxy)hexane of formula (7) below (decomposition temperature for obtaining one-hour half-life = 138°C)

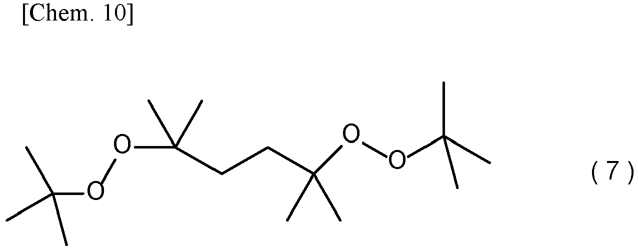

E-2: 1,1-Di(tert-butylperoxy)cyclohexane of formula (8) below (decomposition temperature for obtaining one-hour half-life = 111°C)

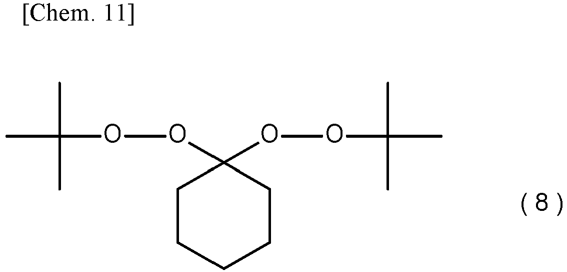

### Component (F)

F-1: 3-Glycidoxypropyltrimethoxysilane of formula (9) below 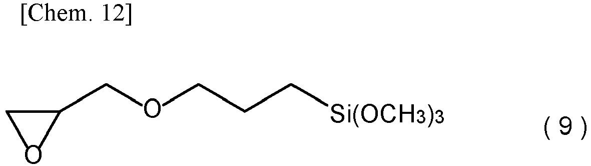
F-2: 8-Glycidoxyoctyltrimethoxysilane of formula (10) below

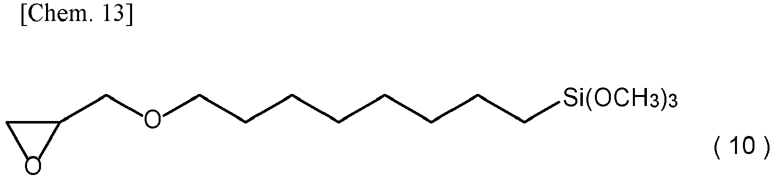

### Component (G)

G-1: A solution obtained by dissolving a platinum-divinyltetramethyldisiloxane complex in the same dimethylpolysiloxane as in A-1 above (platinum atom content, 1 wt%)

### Component (H)

H-1: 1-Ethynyl-1-cyclohexanol of formula (11) below

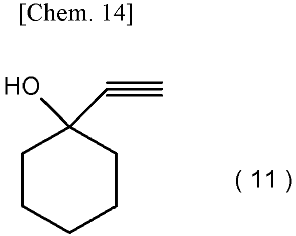

### Component (I)

1-1: The dimethylpolysiloxane of formula (12) below capped at one end with a trimethoxysilyl group

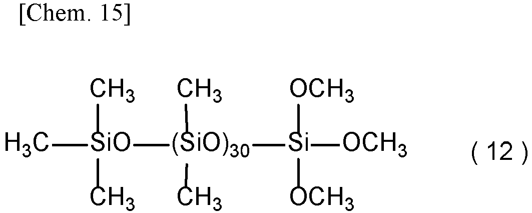

### Component (J)

J-1: The methylvinylpolysiloxane of formula (13) below capped at both ends with trimethoxysilyl groups

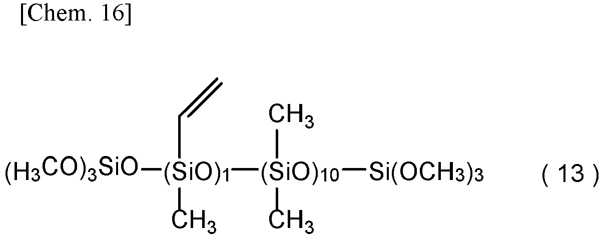

### EXAMPLES 1 TO 10, COMPARATIVE EXAMPLES 1 TO 8

### Preparation of Silicone Compositions

Silicone compositions were prepared using the following method to blend components (A) to (J) in the amounts shown in Tables 1 to 4 below. In the tables, the weight of component (G) is the weight of the solution obtained by dissolving a platinum-divinyltetramethyldisiloxane complex in dimethylpolysiloxane (platinum atom content, 1 wt%). SiH/SiVi is the ratio of the total number of SiH groups in component (D) to the total number of alkenyl groups in components (A), (B) and (J).

Components (A), (B), (C), (I) and (J) were added to a 5-liter planetary mixer (Inoue Mfg., Inc.) and mixed at 170°C for one hour. The mixture was cooled to 40°C or below, following which component (F) was added and mixing was carried out at 70°C for one hour. The mixture was cooled to 40°C or below, following which components (G), (H), (D) and (E) were added and mixing was carried out to uniformity, thereby giving the silicone composition.

The viscosity, thermal conductivity and adhesive strength for each of the silicone compositions obtained as described above were measured by the following methods. The results are presented in Tables 1 to 4.

### Viscosity

The absolute viscosities of the silicone compositions were measured at 25°C using a type PC-IT Malcolm viscometer (10 rpm with rotor A; shear rate, 6 s⁻¹).

### Thermal Conductivity

Each silicone composition was wrapped in food wrap and the thermal conductivity was measured with the TPS-2500S from Kyoto Electronics Manufacturing Co., Ltd.

### Adhesive Strength

Each silicone composition was sandwiched between a 10 mm × 10 mm silicon wafer and a 20 mm × 20 mm nickel-plated copper plate, and was heat-cured at 150°C for 60 minutes while applying pressure with 1.8 kgf clips. The shear adhesive strength was then measured using the Dage series 4000 PXY bondtester (Dage Deutschland GmbH).

**Table 1**

| | | Example | | | | | | |
|---|---|---|---|---|---|---|---|---|
| | | 1 | 2 | 3 | 4 | 5 | 6 | 7 |
| Formulation | A-1 (pbw) | 95 | 95 | 100 | 95 | 95 | 95 | 95 |
| | B-1 (pbw) | 5 | 5 | | 5 | 5 | 5 | 5 |
| | C-1 (pbw) | 560 | 560 | 560 | 560 | 800 | 560 | 560 |
| | C-2 (pbw) | 124 | 124 | 124 | 124 | 177 | 124 | 124 |
| | D-1 (pbw) | 4.1 | 4.1 | 3.5 | 4.1 | 6.2 | 2.7 | 4.1 |
| | D-2 (pbw) | 10.1 | 7.5 | 9.0 | | 16.8 | | 10.1 |
| | D-3 (pbw) | | | | 2.7 | | 1.8 | |
| | E-1 (pbw) | 1.0 | 1.0 | 1.0 | | 1.0 | 1.0 | 0.1 |
| | E-2 (pbw) | | | | 0.7 | | | 0.1 |
| | F-1 (pbw) | | 6.0 | | | | | 6.0 |
| | F-2 (pbw) | 6.0 | | 6.0 | 6.0 | 9.0 | 6.0 | |
| | G-1 (pbw) | 0.35 | 0.35 | 0.35 | 0.35 | 0.35 | 0.35 | 0.35 |
| | H-1 (pbw) | 0.20 | 0.20 | 0.20 | 0.20 | 0.20 | 0.20 | 0.20 |
| | I-1 (pbw) | 8.0 | 8.0 | 8.0 | 8.0 | 8.0 | 8.0 | 8.0 |
| | J-1 (pbw) | 3.0 | 3.0 | 3.0 | 3.0 | 3.0 | 3.0 | 3.0 |
| | SiH/SiVi (ratio between numbers of groups) | 2.3 | 2.0 | 2.3 | 2.3 | 3.5 | 1.5 | 2.3 |
| Evaluation results | Viscosity (Pa·s) | 50 | 60 | 45 | 60 | 210 | 70 | 60 |
| | Thermal conductivity (W/m·K) | 2.4 | 2.3 | 2.3 | 2.4 | 3.2 | 2.4 | 2.3 |
| | Adhesive strength (MPa, Si/Ni-plated Cu) | 3.4 | 3.0 | 3.0 | 3.5 | 2.5 | 2.6 | 2.5 |

**Table 2**

| | | Example | | |
|---|---|---|---|---|
| | | 8 | 9 | 10 |
| Formulation | A-1 (pbw) | 95 | 95 | 70 |
| | B-1 (pbw) | 5 | 5 | 30 |
| | C-1 (pbw) | 560 | 560 | 560 |
| | C-2 (pbw) | 124 | 124 | 124 |
| | D-1 (pbw) | 4.1 | 4.1 | 4.1 |
| | D-2 (pbw) | 10.1 | 10.1 | 10.1 |
| | D-3 (pbw) | | | |
| | E-1 (pbw) | 1.0 | 1.0 | 1.0 |
| | E-2 (pbw) | | | |
| | F-1 (pbw) | 3.0 | 6.0 | |
| | F-2 (pbw) | 3.0 | | 6.0 |
| | G-1 (pbw) | 0.35 | 0.35 | 0.35 |
| | H-1 (pbw) | 0.20 | 0.20 | 0.20 |
| | I-1 (pbw) | 8.0 | 8.0 | 8.0 |
| | J-1 (pbw) | 3.0 | | |
| | SiH/SiVi (ratio between numbers of groups) | 2.3 | 2.7 | 2.1 |
| Evaluation results | Viscosity (Pa·s) | 60 | 50 | 180 |
| | Thermal conductivity (W/m·K) | 2.3 | 2.4 | 2.5 |
| | Adhesive strength (MPa, Si/Ni-plated Cu) | 3.0 | 2.0 | 2.5 |

**Table 3**

| | | Comparative Example | | | | | | |
|---|---|---|---|---|---|---|---|---|
| | | 1 | 2 | 3 | 4 | 5 | 6 | 7 |
| Formulation | A-1 (pbw) | 95 | 45 | 95 | 95 | 95 | 95 | 95 |
| | B-1 (pbw) | 5 | 55 | 5 | 5 | 5 | 5 | 5 |
| | C-1 (pbw) | 2,240 | 560 | 560 | 560 | 560 | 560 | 560 |
| | C-2 (pbw) | 496 | 124 | 124 | 124 | 124 | 124 | 124 |
| | D-1 (pbw) | 4.1 | 4.1 | 0.7 | 9.5 | 4.1 | 4.1 | 4.1 |
| | D-2 (pbw) | 10.1 | 10.1 | 1.8 | 23.3 | 10.1 | 10.1 | 10.1 |
| | D-3 (pbw) | | | | | | | |
| | E-1 (pbw) | 1.0 | 1.0 | 1.0 | 1.0 | | | 1.0 |
| | E-2 (pbw) | | | | | | | |
| | F-1 (pbw) | | | | | | | |
| | F-2 (pbw) | 6.0 | 6.0 | 6.0 | 6.0 | 6.0 | | |
| | G-1 (pbw) | 0.35 | 0.35 | 0.35 | 0.35 | 0.35 | 0.35 | 0.35 |
| | H-1 (pbw) | 0.20 | 0.20 | 0.20 | 0.20 | 0.20 | 0.20 | 0.20 |
| | I-1 (pbw) | 8.0 | 8.0 | 8.0 | 8.0 | 8.0 | 8.0 | 8.0 |
| | J-1 (pbw) | 3.0 | 3.0 | 3.0 | 3.0 | 3.0 | 3.0 | 3.0 |
| | SiH/SiVi (ratio between numbers of groups) | 2.3 | 1.5 | 0.4 | 5.3 | 2.3 | 2.3 | 2.3 |
| Evaluation results | Viscosity (Pa·s) | did not become greaselike | did not become greaselike | did not cure | cured non-uniformly | 50 | 60 | 50 |
| | Thermal conductivity (W/m·K) | | | | | 2.3 | 2.4 | 2.4 |
| | Adhesive strength (MPa, Si/Ni-plated Cu) | | | | | 1.1 | 0.7 | 1.3 |

**Table 4**

| | | Comparative Example |
|---|---|---|
| | | 8 |
| Formulation | A-1 (pbw) | 95 |
| | B-1 (pbw) | 5 |
| | C-1 (pbw) | 560 |
| | C-2 (pbw) | 124 |
| | D-1 (pbw) | 4.1 |
| | D-2 (pbw) | 10.1 |
| | D-3 (pbw) | |
| | E-1 (pbw) | 1.0 |
| | E-2 (pbw) | |
| | F-1 (pbw) | |
| | F-2 (pbw) | 35 |
| | G-1 (pbw) | 0.35 |
| | H-1 (pbw) | 0.20 |
| | I-1 (pbw) | 8.0 |
| | J-1 (pbw) | 3.0 |
| | SiH/SiVi (ratio between numbers of groups) | 2.3 |
| Evaluation results | Viscosity (Pa·s) | 40 |
| | Thermal conductivity (W/m·K) | 2.0 |
| | Adhesive strength (MPa, Si/Ni-plated Cu) | 1.5 |

It is apparent from the results in Tables 1 to 4 that, in the silicone compositions of Examples 1 to 10 which satisfied the conditions of the invention, the bond strength to a nickel-plated copper plate was high. That is, the adhesiveness can be regarded as excellent. On the other hand, in the silicone compositions of Comparative Examples 1 to 8, the bond strength to a nickel-plated copper plate was low. That is, the adhesiveness can be regarded as poor.

Therefore, because the addition-curable silicone compositions of the invention had a good adhesiveness to various types of adherents even when they contained a large amount of heat-conductive filler, it was possible to confirm that a high thermal conductivity and a strong adhesiveness can both be achieved. Because they are endowed with such properties, the addition-curable silicone compositions of the invention can be suitably used in particular as thermal greases for semiconductive devices that generate a large amount of heat or are of large size.

The invention is not limited to the embodiments described above, which are presented here for the purpose of illustration. Any embodiments having substantially the same constitution as the technical ideas set forth in the claims and exhibiting similar working effects are encompassed by the technical scope of the invention.

## Claims

1. An addition-curable silicone composition comprising as essential ingredients:
(A) 100 parts by weight of organopolysiloxane having at least two aliphatic unsaturated hydrocarbon groups per molecule and a kinematic viscosity at 25°C of from 60 to 100,000 mm²/s;
(B) silicone resin having at least one aliphatic unsaturated hydrocarbon group per molecule, in an amount of from 0 to 100 parts by weight per 100 parts by weight of component (A);
(C) at least one heat-conductive filler selected from the group consisting of metals, metal oxides, metal hydroxides, metal nitrides, metal carbides and carbon allotropes, in an amount of from 10 to 95 wt% of the overall composition;
(D) organohydrogenpolysiloxane having two or more silicon-bonded hydrogen atoms per molecule, in an amount such that the number of SiH groups with respect to the sum of the number of aliphatic unsaturated hydrocarbon groups in components (A) and (B) is from 0.5 to 5;
(E) organic peroxide selected from the group consisting of peroxyketals, hydroperoxides, dialkyl peroxides, diacyl peroxides, peroxyesters and peroxydicarbonates, in an amount of from 0.01 to 10 parts by weight per 100 parts by weight of components (A) and (B) combined;
(F) hydrolysable organosilane compound of general formula (1) below, in an amount of from 0.1 to 30 parts by weight per 100 parts by weight of components (A) and (B) combined 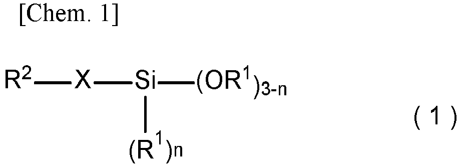 (wherein R¹ are the same or different monovalent hydrocarbon groups of 1 to 10 carbon atoms which may have a substituent; R² is a group selected from the group consisting of epoxy, acryloyl, methacryloyl and alkoxysilyl groups; X is an alkylene group of 1 to 20 carbon atoms which may contain a heteroatom; and n is an integer from 0 to 2); and
(G) an effective amount of platinum group metal catalyst.

2. Addition-curable silicone composition of claim 1, further comprising (H) reaction regulator in an amount of from 0.05 to 5 parts by weight per 100 parts by weight of components (A) and (B) combined.

3. Addition-curable silicone composition of claim 1 or 2, further comprising
(I) hydrolysable organopolysiloxane compound of general formula (2) below in an amount of from 1 to 200 parts by weight of per 100 parts by weight of components (A) and (B) combined 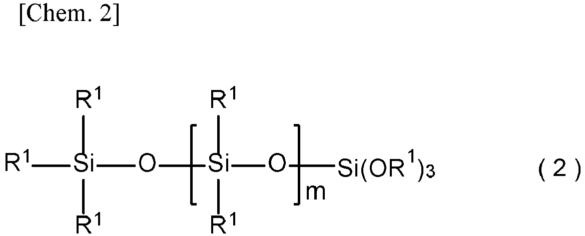 (wherein R¹ are the same or different monovalent hydrocarbon groups of 1 to 10 carbon atoms which may have a substituent, and m is an integer from 5 to 100).

4. Addition-curable silicone composition of any one of claims 1 to 3, further comprising (J) hydrolysable organopolysiloxane compound of general formula (3) below, in an amount of from 1 to 50 parts by weight per 100 parts by weight of components (A) and (B) combined 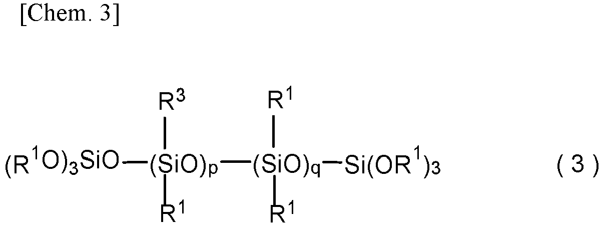 (wherein R¹ are the same or different monovalent hydrocarbon groups of 1 to 10 carbon atoms which may have a substituent; R³ is an alkenyl group of 2 to 6 carbon atoms; and p and q are numbers which satisfy the conditions 1 ≤ p ≤ 50, 1 ≤ q ≤ 99 and 5 ≤ p+q ≤ 100).

5. A method for producing an addition-curable silicone composition of any one of claims 1 to 4, comprising the steps of
first heating and mixing together components (A) to (C) and component (F) at between 50 and 200°C; and
subsequently mixing in components (D), (E) and (G).
